# FASCICULE DE BREVET EUROPEEN

(11) **EP 0 987 153 B1**
(45) Date de publication et mention de la délivrance du brevet: **07.04.2004**
(21) Numéro de dépôt: 99117458.2
(22) Date de dépôt: 09.09.1999
(51) Int. Cl.: B60R 25/02

(54) **Antivol pour une colonne de direction de véhicule automobile comportant des moyens de fixation d'un mécanisme d'antivol**
Vorrichtung zur Diebstahlsicherung für eine Lenksäule eines Kraftfahrzeuges mit Befestigungsmittel der Sperrvorrichtung
Theft preventing device for the steering shaft of motor vehicles, comprising fixing means for an antitheft mechanism

(30) Priorité: 16.09.1998 FR 9811603
(43) Date de publication de la demande: 22.03.2000
(73) Titulaire: VALEO SECURITE HABITACLE, 94000 Créteil (FR)
(72) Inventeur: Touratier, Thierry, 21000 Dijon (FR)
(74) Mandataire: Hervouet, Sylvie

(56) Documents cités:
- EP-A- 0 957 015
- FR-A- 663 202
- FR-A- 2 602 194

## Description

L'invention concerne un antivol pour une colonne de direction de véhicule automobile comportant des moyens perfectionnés de fixation des composants de l'antivol.

L'invention concerne plus particulièrement un antivol pour une colonne de direction de véhicule automobile, du type dans lequel l'antivol comporte un boîtier dans lequel est agencé un mécanisme d'antivol, et du type dans lequel le mécanisme d'antivol comporte un corps de mécanisme et un élément mobile de verrouillage qui se déplace, par rapport au corps de mécanisme et en translation longitudinale d'arrière en avant entre une position de repos, dans laquelle l'antivol est déverrouillé, et une position active dans laquelle l'antivol est verrouillé.

Le boîtier de l'antivol peut avoir plusieurs fonctions.

Lorsque l'antivol est agencé à l'intérieur de l'habitacle du véhicule, près du volant, il permet d'une part de dissimuler le mécanisme d'antivol qui est peu esthétique et d'autre part d'éviter qu'un utilisateur du véhicule ne se salisse au contact de la graisse qui peut éventuellement être utilisée pour lubrifier le mécanisme. En évitant tout contact entre l'usager et le mécanisme, on évite que l'usager ne se blesse ou qu'il n'endommage ou ne bloque par inadvertance l'antivol.

Dans le cas où l'antivol est un antivol électrique dans lequel l'élément mobile est motorisé, l'ensemble de l'antivol peut être agencé à l'extérieur de l'habitacle, par exemple à proximité de l'extrémité de la colonne de direction qui est en liaison par exemple avec une crémaillère de direction. Seuls les moyens de commande de l'antivol restent alors accessibles depuis l'habitacle.

Dans ce cas, le boîtier aura aussi pour rôle d'isoler le mécanisme de l'antivol des poussières et projections diverses auxquelles il est susceptible d'être exposé.

Dans tous les cas, le boîtier d'antivol permet par ailleurs d'éviter qu'un cambrioleur ne puisse intervenir directement sur le mécanisme pour provoquer le déverrouillage de l'antivol et ainsi s'emparer du véhicule.

Toutefois, le boîtier doit forcément être conçu de manière à permettre à un réparateur d'intervenir sur le mécanisme d'antivol en cas de défaillance de ce dernier.

Aussi, avec un antivol de type connu, le cambrioleur éventuel pourra profiter de la possibilité de démontage du boîtier ou du mécanisme, ce qui limite fortement le rôle anti-effraction de celui-ci.

L'invention concerne plus particulièrement un antivol dans lequel le boîtier comporte au moins une coque dans laquelle le mécanisme d'antivol est fixé par l'intermédiaire d'au moins une tige d'assemblage, formant goupille, accessible depuis l'extérieur de la coque du boîtier pour le montage ou le démontage du mécanisme, qui s'étend axialement à l'intérieur de la coque du boîtier et à travers le corps du mécanisme selon une direction perpendiculaire à la direction longitudinale de translation de l'élément mobile de verrouillage et à proximité de l'élément mobile.

Selon une conception connue de ce type, l'organe mobile de verrouillage est par exemple un pêne de verrouillage et la tige d'assemblage est la tige d'une vis de fixation qui, pour permettre l'assemblage initial des différents composants, puis un démontage ultérieur, a sa tête de vis située à l'extérieur du boîtier et qui est donc malheureusement accessible à un cambrioleur.

On a déjà proposé des moyens qui permettent de rendre le mécanisme indémontable pour un éventuel cambrioleur mais qui laisse la possibilité à un réparateur, qui intervient avec le consentement du propriétaire du véhicule, d'accéder au mécanisme d'antivol dont il a pu préalablement amener le pêne de verrouillage dans sa position de repos, et ceci par exemple au moyen de la clef que le propriétaire lui a confiée.

Dans ce but, on a proposé un antivol du type décrit précédemment dans lequel la tige d'assemblage coopère avec l'élément mobile de manière à ne permettre un déplacement axial de la tige d'assemblage pour le démontage du mécanisme d'antivol que lorsque l'élément mobile de verrouillage est en position de repos.

Cette conception est satisfaisante mais elle nécessite de faire appel à une vis d'assemblage pour le montage du mécanisme qui est difficile à mettre en place automatiquement et qui nécessite notamment d'aligner longitudinalement avec précision le corps du mécanisme par rapport à la coque dans une position déterminée afin notamment d'introduire axialement la vis d'assemblage.

Le document EP0957015 déposé antérieurement, mais publié après la date de dépôt de la présente demande décrit un antivol se rapportant au domaine de l'invention.

Afin de remédier à ces inconvénients, l'invention propose un antivol pour un colonne de direction de véhicule automobile.

Selon d'autres caractéristiques de l'invention :
- la tige d'assemblage est étagée et comporte un tronçon inférieur étroit de diamètre réduit délimité verticalement, par rapport à un tronçon intermédiaire élargi de plus grand diamètre, par un épaulement radial inférieur qui, en position haute de la tige d'assemblage, s'étend en regard d'une portion de surface supérieure, d'orientation longitudinale et horizontale de l'élément mobile de verrouillage, et une face latérale, d'orientation longitudinale et verticale de l'élément mobile de verrouillage, adjacente à la paroi cylindrique du tronçon inférieur étroit, comporte une encoche verticale permettant le passage du tronçon intermédiaire élargi de la tige d'assemblage en position basse escamotée lorsque l'élément mobile de verrouillage est en position de repos ;
- ledit épaulement radial inférieur est la face annulaire inférieure d'une collerette radiale extérieure qui constitue le tronçon intermédiaire élargi et qui délimite le tronçon inférieur étroit par rapport au tronçon d'extrémité supérieure de la tige d'assemblage ;
- un ressort de compression est interposé verticalement entre ledit épaulement inférieur et le corps du mécanisme pour rappeler élastiquement la tige d'assemblage vers sa position haute de blocage ;
- le tronçon inférieur étroit de la tige d'assemblage est guidé en coulissement dans un perçage du corps du mécanisme ;
- le ressort de rappel est traversé par le tronçon inférieur étroit de la tige d'assemblage ;
- le ressort de rappel est décalé latéralement par rapport au tronçon inférieur étroit de la tige d'assemblage ;
- le perçage de guidage du tronçon inférieur étroit de la tige d'assemblage débouche verticalement vers le haut dans le fond d'un logement dans lequel se déplace la collerette et qui est lui-même débouchant vers le haut de manière que la face annulaire supérieure de la collerette coopère avec une portion en vis-à-vis de la face interne de la paroi supérieure de la coque pour déterminer la position haute de blocage de la tige d'assemblage ;
- le perçage de guidage du tronçon inférieur étroit de la tige d'assemblage débouche verticalement vers le bas, et l'extrémité libre inférieure de la tige d'assemblage fait saillie verticalement vers le bas pour coopérer avec une portion en vis-à-vis d'une vis de fixation qui est mise en place après l'assemblage du mécanisme d'antivol pour immobiliser la tige d'assemblage en position haute de blocage ;
- la vis de fixation est coaxiale à la tige d'assemblage ;
- la vis de fixation est perpendiculaire à la tige d'assemblage ;
- en position serrée de la vis de fixation, au moins une première face latérale externe qui délimite le corps du mécanisme est serrée transversalement en appui contre une portion de surface interne en vis-à-vis d'une première paroi latérale de la coque du boîtier sensiblement parallèle à l'axe de la vis de fixation, et le corps du mécanisme comporte une partie qui est expansible transversalement sous l'action de la tige filetée de la vis de fixation lors du vissage de cette dernière pour coopérer avec une portion de surface interne en vis-à-vis d'une seconde paroi latérale de la coque du boîtier, parallèle et opposée à la première paroi latérale, pour provoquer le serrage de la première face latérale du corps du mécanisme en appui contre la face latérale interne de la première paroi latérale de la coque ;
- la partie expansible est réalisée venue de matière avec le corps du mécanisme ;
- la partie expansible du corps du mécanisme est une patte qui est reliée au corps du mécanisme par une portion de matière formant charnière d'articulation de la patte autour d'un axe perpendiculaire à l'axe de la vis de fixation ;
- la patte articulée comporte une première facette latérale, inclinée par rapport à l'axe de la vis, formant une rampe de commande avec laquelle coopère la vis lors du vissage pour provoquer son pivotement à partir d'une position d'origine vers une position expansée dans laquelle elle provoque le serrage de la première face latérale du corps du mécanisme en appui contre la face latérale interne de la première paroi latérale de la coque ;
- la patte articulée comporte une seconde facette latérale plane qui est coplanaire à ladite seconde face latérale du corps du mécanisme lorsque la patte est dans sa position d'origine, et qui fait saillie transversalement vers l'extérieur par rapport à ladite seconde face lorsque la patte articulée est dans sa position expansée ;
- le corps du mécanisme comporte un perçage taraudé qui reçoit en vissage un tronçon fileté de la vis de fixation ;
- la tête de la vis de fixation est séparée de la tige filetée par rupture lorsque le couple de serrage ou de desserrage appliqué à la tête est supérieur à une valeur prédéterminée ;
- lors de l'introduction longitudinale du mécanisme dans la coque du boîtier, la partie du tronçon d'extrémité supérieure de la tige d'assemblage qui fait saillie par rapport à la face supérieure du corps du mécanisme coopère avec le bord de la coque qui délimite l'ouverture d'introduction du mécanisme pour provoquer l'effacement automatique de la tige d'assemblage.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée des principaux composants d'un premier mode de réalisation d'un antivol de colonne de direction de véhicule automobile réalisé conformément aux enseignements de l'invention ;
- la figure 2 est une vue en section, selon la ligne 2-2 de la figure 3, par un plan vertical transversal passant par l'axe de la tige d'assemblage, et sur laquelle le mécanisme d'antivol est illustré en position assemblée avec la vis de fixation illustrée en position serrée ;
- la figure 3 est une vue en section selon la ligne 3-3 de la figure 2 ;
- la figure 4 est une vue de détail en section selon la ligne 4-4 de la figure 3 ;
- les figures 5 et 6 sont des vues similaires à celles des figures 2 et 3 qui illustrent une variante de réalisation des moyens élastiques de rappel en position haute de la tige d'assemblage ; et
- la figure 7 est une vue similaire à celle de la figure 5 qui illustre une variante de l'agencement de la vis de fixation.

Dans la description qui va suivre, des éléments et composants identiques, similaires ou analogues seront désignés par les mêmes chiffres de référence.

Les termes avant, arrière, verticalement, horizontalement, supérieur, inférieur, etc. seront utilisés en référence aux dessins annexés dans le but de simplifier la description et les revendications et d'en faciliter la compréhension.

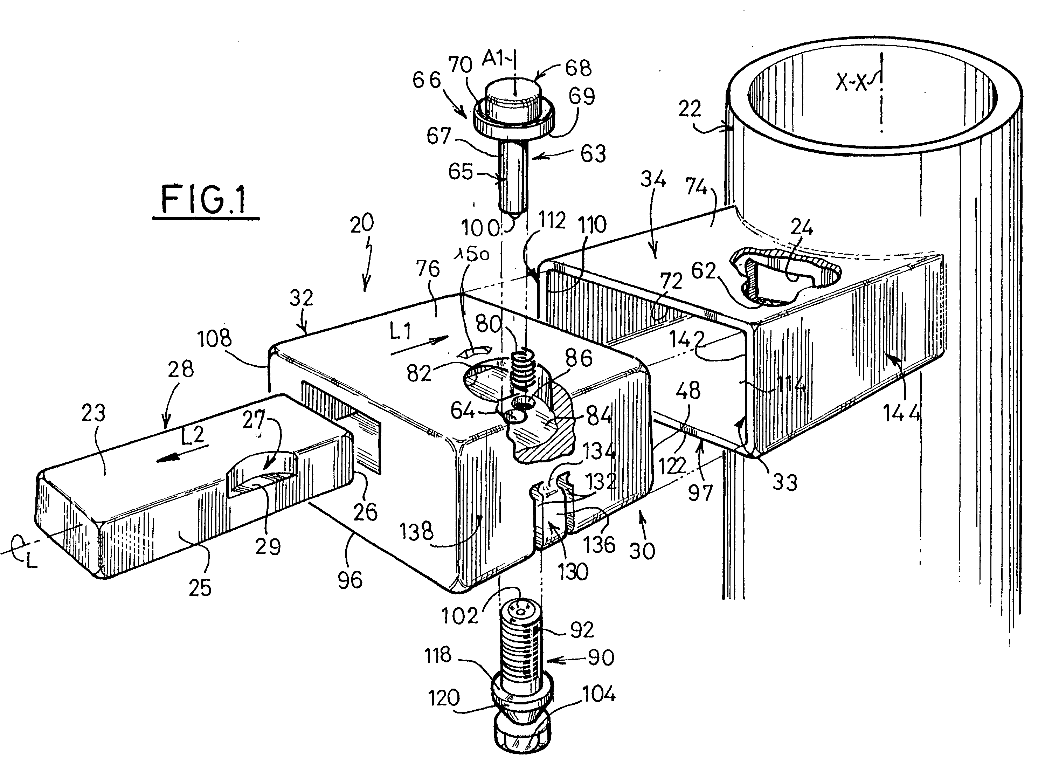

On a représenté sur la figure 1 les principaux composants d'un antivol de direction 20 de conception générale connue.

Sur cette figure, on peut voir un tube 22 de guidage d'une colonne de direction (non représentée) qui est montée à rotation à l'intérieur du tube 22 autour de l'axe X-X.

Le tube 22 comporte une fenêtre 24 destinée à permettre le passage de l'extrémité libre avant 26 d'un pêne de verrouillage 28 appartenant à un mécanisme 30 d'antivol.

Le pêne 28 est monté mobile en coulissement longitudinal selon une direction L sensiblement perpendiculaire et concourante à l'axe X-X.

Le mécanisme d'antivol 30 comporte un corps 32 de mécanisme, formant guide du pêne de verrouillage 28, qui est de forme générale parallélépipédique rectangle et qui, en position assemblée de l'antivol, est reçu à l'intérieur d'une coque ou coquille 34 en métal, de forme complémentaire de celle du corps 32 qui est rapportée, par exemple par soudage, sur le tube de colonne de direction 22 de manière que le pêne de verrouillage 28 soit en regard de la fenêtre 24.

L'assemblage final du mécanisme d'antivol 30 dans la coque 34 s'effectue en l'introduisant longitudinalement, c'est-à-dire parallèlement à la direction L et dans le sens indiqué par la flèche L1 de la figure 1, à l'intérieur de la coque 34 jusqu'à ce que la face d'extrémité longitudinale avant 48 du corps 32 soit sensiblement en appui contre la portion en vis-à-vis du tube de colonne de direction 22.

Pour fixer le mécanisme 30 dans cette position d'assemblage, il est connu de faire appel à une tige d'assemblage 63 faisant fonction de goupille qui s'étend transversalement à travers au moins un trou supérieur 62 formé dans la paroi supérieure horizontale 74 de la coque 34 et qui s'étend aussi à travers un perçage 64 du corps 32 du mécanisme d'antivol 30.

Selon une conception connue, l'axe vertical A1 de la tige d'assemblage est parallèle à l'axe X-X de la colonne de direction.

En position assemblée, la tige d'assemblage 63 retient ainsi longitudinalement le mécanisme d'antivol 30 en position dans la coque 34.

Sous l'action d'un verrou de commande (non représenté), il est alors possible de provoquer des déplacements longitudinaux en va-et-vient dans les deux sens L1 et L2 du pêne 28 afin de provoquer le verrouillage ou le déverrouillage de la colonne de direction.

Selon une conception générale connue, le pêne 28 est de section sensiblement rectangulaire et il comporte au moins une face latérale 25 d'orientation longitudinale et qui s'étend dans un plan vertical, ainsi qu'une face supérieure 23 d'orientation longitudinale et qui s'étend dans un plan sensiblement horizontal.

Conformément aux enseignements de l'invention, le pêne de verrouillage 28 comporte, dans sa face latérale 25, une encoche 27 en arc de cylindre concave d'axe vertical qui est débouchante verticalement vers le haut dans la face supérieure 23 et transversalement dans la face latérale 25.

Conformément aux enseignements de l'invention, la tige d'assemblage 63 présente une conception étagée.

Ainsi, la tige d'assemblage 63 comporte un tronçon inférieur étroit 65 dont la paroi cylindrique extérieure 67 est reçue en coulissement et en guidage vertical dans le perçage 64 du corps 32 du mécanisme d'antivol 30, la position du perçage 64 étant telle que le tronçon inférieur étroit 65 est situé à proximité de la face latérale longitudinale 25 du pêne de verrouillage 28.

Au dessus du tronçon inférieur étroit 65, la tige d'assemblage 63 comporte un tronçon intermédiaire élargi 66 qui est réalisé sous la forme d'une collerette radiale extérieure dont le diamètre est tel que la collerette peut être reçue dans l'encoche cylindrique concave 27 du pêne de verrouillage 28.

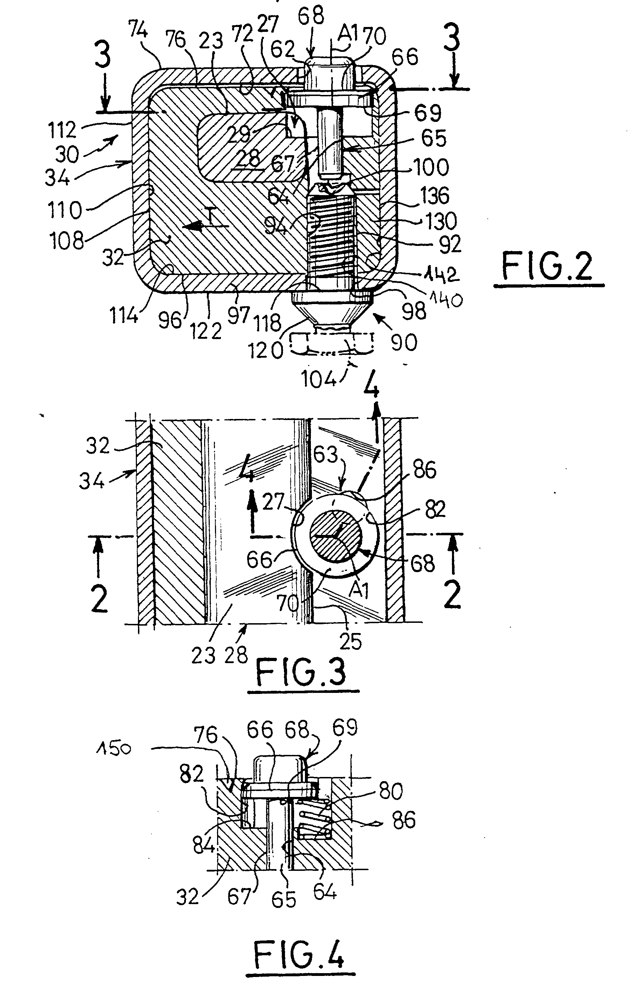

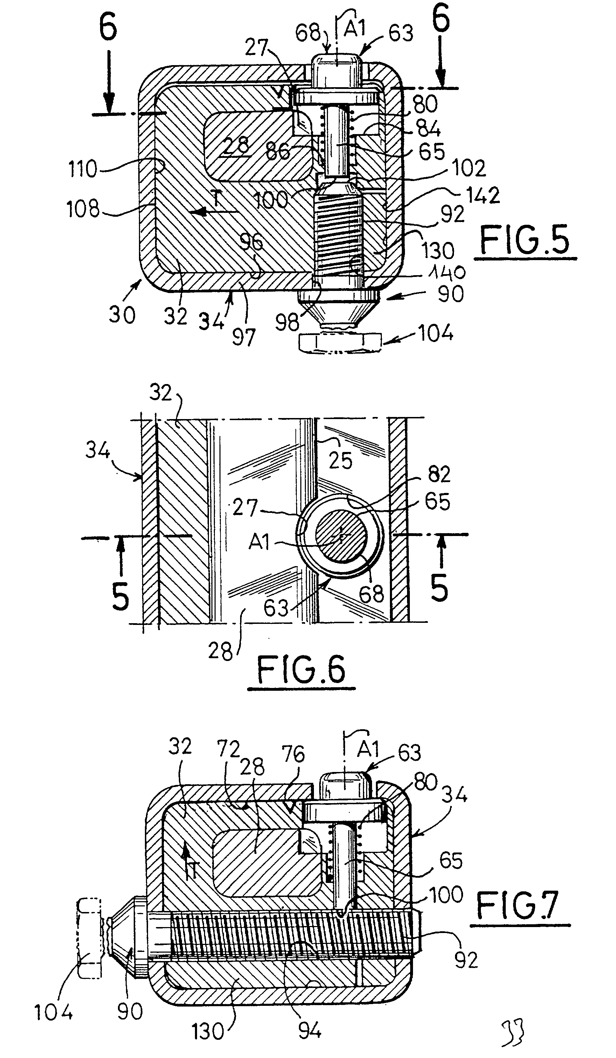

En position basse escamotée de la tige d'assemblage 63, comme cela sera expliqué par la suite, l'épaulement annulaire inférieur 69 de la collerette radiale 66 est susceptible de venir verticalement en appui contre la face supérieure 29 de l'encoche 27 tandis que la collerette 66 est reçue avec un léger jeu radial dans l'encoche 27 dans laquelle elle peut pénétrer verticalement de haut en bas en partant de la position haute de la tige d'assemblage 63 illustrée aux figures 2 et 5.

La collerette 66 est aussi délimitée par un épaulement annulaire supérieur 70 qui délimite axialement vers le bas le tronçon d'extrémité supérieure 68 dont le diamètre extérieur est légèrement inférieur à celui du trou 62, l'épaulement supérieur 70 délimitant par ailleurs la position haute de la tige d'assemblage 63 en venant en appui contre la portion en vis-à-vis de la face interne 72 de la paroi supérieure horizontale 74 de la coque 34 dans laquelle est formé le trou 62.

Pour permettre des déplacements axiaux verticaux dans les deux sens de la tige d'assemblage 63 par rapport au corps 32 du mécanisme 30, ce dernier comporte, dans sa face supérieure horizontale 76, un logement cylindrique 82 coaxial au perçage 64 et dont le fond 84 se situe sensiblement à la même altitude que le fond 29 de l'encoche 27, le diamètre interne du logement 82 étant légèrement supérieur au diamètre extérieur de la collerette 66.

Afin de rappeler élastiquement en permanence la tige d'assemblage 63 vers le haut, position dans laquelle sa tête d'extrémité supérieure 68 s'étend à travers le trou 62 pour immobiliser longitudinalement le corps 32 du mécanisme d'antivol 30 par rapport à la coque 34 formant boîtier du mécanisme d'antivol, il est prévu un ressort de compression 80 qui est interposé entre le fond 84 du logement 82 et la portion en vis-à-vis de l'épaulement inférieur 69 de la collerette radiale extérieure 66.

Plus précisément, le ressort 80 est décalé transversalement par rapport à la tige d'assemblage 63 et, afin de maintenir le ressort hélicoïdal 80 en position verticale, sa spire inférieure est reçue dans un trou borgne complémentaire 86 formé dans le fond 84 du logement 82.

Dans la variante de réalisation illustrée aux figures 5 et 6, le ressort hélicoïdal de compression 80 est coaxial à la tige d'assemblage 63, c'est-à-dire qu'il est traversé par le tronçon inférieur étroit 65 de la tige d'assemblage 63.

De manière à maintenir en place la tige d'assemblage 63 dans le corps 32, l'épaulement annulaire supérieur 70 de la collerette 66 est de préférence de forme tronconique, comme on peut le voir en particulier figure 4.

Le maintien de la tige d'assemblage 63 s'effectue par un sertissage 150 pratiqué dans la face supérieure horizontale 76 du corps 32 qui provoque une déformation de l'extrémité supérieure du logement cylindrique 82 de manière à ce que l'épaulement 70 vienne en appui contre cette déformation et empêche ainsi la tige 63 de s'échapper du logement 82 sous l'action du ressort 80.

Afin d'immobiliser la tige d'assemblage 63 en position haute de blocage, il est prévu une vis 90 de fixation qui, dans les exemples de réalisation illustrés aux figures 2 à 6, est une vis verticale coaxiale à la tige d'assemblage 63.

Le corps fileté 92 de la vis de fixation 90 est monté vissé dans un taraudage débouchant 94 du corps 32 du mécanisme d'antivol 30.

Plus précisément, le taraudage 94 débouche verticalement vers le bas à travers la face inférieure horizontale 96 du corps 32 de manière que le corps fileté 92 de la vis traverse un trou 98 formé dans la paroi 96.

Comme on peut le voir aux figures 2 et 5, le perçage 64 qui reçoit et guide le tronçon inférieur étroit 65 de la tige d'assemblage 63 débouche verticalement vers le bas dans le trou taraudé 94 de manière que la face d'extrémité inférieure 100 de la tige d'assemblage 63 s'étend en regard de la face supérieure 102 de la vis de fixation 90 lorsque cette dernière est en position vissée, comme illustré aux figures 2 et 5, pour empêcher tout déplacement axial vers sa position basse escamotée de la tige d'assemblage 63, même lorsque le pêne de verrouillage 28 est dans sa position arrière de repos illustrée aux figures 2 et 5.

Pour l'entraînement en rotation et le vissage de la vis de fixation 90, cette dernière comporte une tête d'entraînement 104, qui est par exemple une tête à six pans.

On décrira maintenant l'assemblage de l'antivol 20 et le fonctionnement de l'agencement de sécurité anti-effraction résultant de la conception du pêne de verrouillage 28 et de la tige d'assemblage 63.

Pour pouvoir amener la tige d'assemblage 63 en position basse escamotée de montage, c'est-à-dire dans une position dans laquelle la totalité de son tronçon d'extrémité supérieure 68 est située à l'intérieur du logement 82, il est nécessaire de positionner longitudinalement le pêne de verrouillage 28 par rapport au corps 32 du mécanisme d'antivol 30 dans la position illustrée aux figures 2 et 5 dans laquelle l'encoche 27 est située longitudinalement au droit du logement 82.

Dans cette position arrière de repos du pêne de verrouillage, il est donc possible d'escamoter la tige d'assemblage 63 dans le corps 32, à l'encontre de l'effort élastique de rappel qui lui est appliqué par le ressort hélicoïdal de compression 80.

Dans cette position, il est donc possible d'introduire longitudinalement selon la direction L1, le sous-ensemble constitué par le corps 32 et le pêne de verrouillage 28 avec la tige d'assemblage 63 en position basse escamotée à l'intérieur de la coque 34 - par la face d'extrémité arrière ouverte 33 de cette dernière - et ceci jusqu'à ce que la face transversale d'extrémité avant 48 du corps 32 vienne en butée contre la portion en vis-à-vis du tube 22 de la colonne de direction.

Au cours de ce mouvement, le tronçon d'extrémité supérieur formant tête 68 de la tige d'assemblage 63 est d'abord maintenu manuellement escamoté dans le logement 82 puis il est retenu verticalement vers le haut par la face interne 72 de la paroi supérieure horizontale 74 de la coque 34 jusqu'à ce que la tige d'assemblage 63 soit située longitudinalement au droit du trou 62.

Dès que cette position est atteinte, sous l'action du ressort hélicoïdal de compression 80, la tige d'assemblage 63 est sollicitée élastiquement vers sa position haute de montage dans laquelle la tête 68 est reçue dans le trou 62 et dans laquelle elle immobilise longitudinalement le mécanisme d'antivol 30 par rapport au boîtier en forme de coque 34.

La tête 68 peut être légèrement arrondie à sa partie supérieure de façon à provoquer automatiquement son escamotage vertical vers le bas lorsque cette portion arrondie ou sphérique coopère avec le bord en vis-à-vis de la face arrière ouverte 33 de la coque 34 lors du mouvement de montage par introduction longitudinale.

Une fois la position de montage atteinte, un démontage du mécanisme d'antivol 30 - c'est-à-dire de son corps 32 - n'est possible (par extraction longitudinale d'avant en arrière selon la direction L2) que si le pêne de verrouillage 28 est à nouveau dans sa position arrière de repos.

En effet, lorsque le pêne de verrouillage 28 est en position active avant dans laquelle il verrouille la colonne de direction, la collerette élargie 66 a son épaulement inférieur 69 en regard d'une portion pleine de la face horizontale supérieure 23 du corps du pêne 28 et il est donc impossible d'escamoter la tige d'assemblage 63 verticalement vers le bas, c'est-à-dire qu'il est impossible de faire sortir la tête 68 hors du trou 62.

A titre de sécurité supplémentaire, on vient ensuite visser la vis de fixation 90, en l'entraînant par sa tête 104, jusqu'à ce qu'elle occupe la position illustrée aux figures 2 et 5 dans laquelle il devient impossible d'escamoter verticalement vers le bas la tige d'assemblage 63.

Pour éviter qu'un voleur ne dévisse la vis de fixation 90, sa tête 104 est séparée du corps fileté 92 par rupture lorsque le couple de serrage ou de desserrage appliqué à la tête 104 est supérieur à une valeur prédéterminée.

Lorsque la tête 104 est séparée, comme cela est illustré en silhouette aux figures 2 et 5, il est impossible à un voleur de dévisser simplement la vis de fixation 90 et il ne peut donc pas escamoter la tige d'assemblage 63 même au cas où il parviendrait à agir manuellement sur le pêne de verrouillage 28 pour ramener celui-ci, sans la clef de l'antivol, dans sa position arrière de repos dans laquelle l'encoche 27 est en regard du tronçon intermédiaire élargi 66.

En utilisation normale de l'antivol, on constate que la surface cylindrique externe 67 du tronçon inférieur étroit 65 de la tige d'assemblage 63 s'étend en regard de la face latérale 25 avec un léger jeu transversal, c'est-à-dire qu'il n'y a pas d'interférence mécanique entre la tige d'assemblage 63 et le pêne de verrouillage 28, ce dernier pouvant être manipulé au moyen de la clef d'antivol entre ses positions arrière de repos et avant active de verrouillage de la colonne de direction.

Grâce à l'agencement de la vis de fixation 90, il est aussi possible de fixer le corps 32 du mécanisme d'antivol 30 sans jeux dans la coque 34, jeux qui résultent des tolérances de fabrication et des dimensions des différents composants permettant initialement de garantir que le mécanisme puisse être monté à l'intérieur du boîtier 34 lors des opérations d'assemblage.

Ainsi, en position serrée de la vis de fixation 90, la face latérale externe verticale 108 du corps 32 est montée serrée transversalement contre la surface latérale interne verticale en vis-à-vis 110 de la paroi latérale verticale 112 de la coque 34, tandis que la face inférieure horizontale 96 du corps 32 est serrée en appui contre la surface interne 114 de la paroi horizontale inférieure 97 de la coque 34.

Le serrage mutuel des surfaces 96 et 114 résulte de la simple opération de vissage de la vis de fixation 90 au cours de laquelle la face supérieure 118 de la collerette 120 de la vis vient prendre appui contre la face externe 122 de la paroi horizontale inférieure 97.

Par contre, le serrage transversal des surfaces 108 et 110, selon la flèche T des figures 2 et 5, résulte de la présence d'une patte formant cheville expansible 130 réalisée ici venue de matière avec le corps 32.

Comme on peut le voir sur la figure 1, la patte 130 est délimitée verticalement par deux fentes 132 et elle est articulée au voisinage de son extrémité supérieure par une portion amincie 134 formant charnière.

La patte 130 est délimitée latéralement par une facette extérieure 136 qui est sensiblement coplanaire à la face latérale verticale 138 du corps 32 dans laquelle est découpée la patte 130 lorsque la patte 130 est dans son état d'origine illustré à la figure 1, c'est-à-dire avant introduction et vissage de la vis de fixation 90.

L'autre facette intérieure 140 de la patte 130 est légèrement inclinée de manière à constituer une rampe avec laquelle coopère le corps fileté 92 de la tige 90 lors du vissage de cette dernière pour provoquer le pivotement latéral vers l'extérieur, c'est-à-dire vers la droite en considérant les figures 2 et 5, de la patte formant cheville expansible 130 qui vient prendre appui contre la surface interne en vis-à-vis 142 de la paroi latérale verticale 144 de la coque 34 pour obtenir l'effet de serrage selon la direction T.

Dans la variante de réalisation illustrée à la figure 7, si on la compare au mode de réalisation illustré aux figures 5 et 6, seule la direction de vissage de la vis de fixation 90 est différente, c'est-à-dire qu'elle s'étend selon un axe perpendiculaire et concourant à l'axe A1 de la tige d'assemblage 63.

Ainsi, la face transversale d'extrémité inférieure 100 du tronçon inférieur étroit 65 de la tige d'assemblage 63 s'étend en regard d'une portion en vis-à-vis du corps fileté 92 de la vis de fixation 90 empêchant tout déplacement axial vers le bas de la tige d'assemblage 63 lorsque la vis de fixation 90 est dans sa position vissée illustrée à la figure 7.

De même, la patte formant cheville expansible 130 est agencée pour provoquer, lors du vissage de la vis 90, le serrage des surfaces horizontales supérieures en vis-à-vis 72 et 76.

## Revendications

1. Antivol (20) pour une colonne de direction (22) de véhicule automobile, du type dans lequel l'antivol comporte un boîtier (34) dans lequel est agencé un mécanisme (30) d'antivol, et du type dans lequel le mécanisme (30) d'antivol comporte un corps de mécanisme (32) et un élément mobile de verrouillage (28) qui se déplace, par rapport au corps (32) de mécanisme (30) et en translation longitudinale d'arrière en avant, entre une position de repos, dans laquelle l'antivol est déverrouillé, et une position active dans laquelle l'antivol est verrouillé, et du type dans lequel le boîtier comporte au moins une coque (34) dans laquelle le mécanisme d'antivol (30) est fixé par l'intermédiaire d'au moins une tige d'assemblage (63), accessible depuis l'extérieur de la coque (34) du boîtier pour le montage ou le démontage du mécanisme, qui s'étend axialement (A1) à l'intérieur de la coque (34) du boîtier et à travers le corps (32) du mécanisme (30) selon une direction verticale (A1) perpendiculaire à la direction longitudinale (L) de translation de l'élément mobile de verrouillage (28) et à proximité de l'élément mobile (28, 25), et du type dans lequel la tige d'assemblage (63) coopère avec l'élément mobile (28, 27) de manière à ne permettre un déplacement axial (A1) de la tige d'assemblage (63) pour le démontage du mécanisme d'antivol (30) que lorsque l'élément mobile de verrouillage (28) est en position de repos, la tige d'assemblage (63) est une tige escamotable portée par le corps (32) du mécanisme par rapport auquel elle est montée coulissante entre une position haute de blocage vers laquelle elle est rappelée élastiquement (80) et dans laquelle son tronçon d'extrémité supérieure (68) s'étend à travers un trou d'assemblage (62) formé dans une portion de paroi supérieure (74) de la coque, et une position basse escamotée de montage ou de démontage **caractérisé en ce que** la tige d'assemblage (63) comporte un tronçon intermédiaire élargie (66) destiné à être logé dans une encoche (27) de l'élément mobile de verrouillage (28) en position le repos de celui-ci pour permettre dans cette position l'escamotage de la tige d'assemblage (63).

2. Antivol selon la revendication 1, **caractérisé en ce que** la tige d'assemblage (63) est étagée et comporte un tronçon inférieur étroit (65) de diamètre réduit délimité verticalement, par rapport à un tronçon intermédiaire élargi (66) de plus grand diamètre, par un épaulement radial inférieur (69) qui, en position haute de la tige d'assemblage, s'étend en regard d'une portion de surface supérieure (23), d'orientation longitudinale et horizontale de l'élément mobile de verrouillage (28), et **en ce qu'**une face latérale (25), d'orientation longitudinale et verticale de l'élément mobile de verrouillage (28), adjacente à la paroi cylindrique (67) du tronçon inférieur étroit (65), comporte une encoche verticale (27) permettant le passage du tronçon intermédiaire élargi (66) de la tige d'assemblage (63) en position basse escamotée lorsque l'élément mobile de verrouillage (28) est en position de repos.

3. Antivol selon la revendication 2, **caractérisé en ce que** ledit épaulement radial inférieur (69) est la face annulaire inférieure d'une collerette radiale extérieure (66) qui constitue le tronçon intermédiaire élargi et qui délimite le tronçon inférieur étroit (65) par rapport au tronçon d'extrémité supérieure (68) de la tige d'assemblage (63).

4. Antivol selon l'une des revendications 2 ou 3, **caractérisé en ce que** un ressort de compression (80) est interposé verticalement entre ledit épaulement inférieur (69) et le corps (32, 84, 86) du mécanisme pour rappeler élastiquement la tige d'assemblage (63) vers sa position haute de blocage.

5. Antivol selon l'une quelconque des revendications 2 à 4, **caractérisé en ce que** le tronçon inférieur étroit (65) de la tige d'assemblage (63) est guidé en coulissement dans un perçage (64) du corps (32) du mécanisme (30).

6. Antivol selon la revendication 5 prise en combinaison avec la revendication 4, **caractérisé en ce que** le ressort de rappel (80) est traversé par le tronçon inférieur étroit (65) de la tige d'assemblage (63).

7. Antivol selon la revendication 5, **caractérisé en ce que** le ressort de rappel (80) est décalé latéralement par rapport au tronçon inférieur étroit (65) de la tige d'assemblage. (63)

8. Antivol selon l'une quelconque des revendications 5 à 7 prise en combinaison avec la revendication 3, **caractérisé en ce que** le perçage (64) de guidage du tronçon inférieur étroit (65) de la tige d'assemblage (63) débouche verticalement vers le haut dans le fond d'un logement (82) dans lequel se déplace la collerette (66) et qui est lui-même débouchant vers le haut de manière que la face annulaire supérieure (70) de la collerette coopère avec une portion en vis-à-vis de la face interne (72) de la paroi supérieure (74) de la coque (34) pour déterminer la position haute de blocage de la tige d'assemblage (63).

9. Antivol selon l'une quelconque des revendications 5 à 8, **caractérisé en ce que** le perçage de guidage du tronçon inférieur étroit (65) de la tige d'assemblage (63) débouche verticalement vers le bas, et **en ce que** l'extrémité libre inférieure (100) de la tige d'assemblage (63) fait saillie verticalement vers le bas pour coopérer avec une portion en vis-à-vis (102, 92) d'une vis (90) de fixation qui est mise en place après l'assemblage du mécanisme d'antivol pour immobiliser la tige d'assemblage (63) en position haute de blocage.

10. Antivol selon la revendication 9, **caractérisé en ce que** la vis de fixation (90) est coaxiale (A1 ) à la tige d'assemblage (63).

11. Antivol selon la revendication 9, **caractérisé en ce que** la vis de fixation (90) est perpendiculaire à la tige d'assemblage (63).

12. Antivol selon l'une quelconque des revendications 9 à 11, **caractérisé en ce que**, en position serrée de la vis de fixation (90) , au moins une première face latérale externe (108) qui délimite le corps (32) du mécanisme (30) est serrée transversalement en appui contre une portion de surface interne (110) en vis-à-vis d'une première paroi latérale (112) de la coque (34) du boîtier sensiblement parallèle à l'axe (A1) de la vis de fixation, et **en ce que** le corps (32) du mécanisme comporte une partie (130) qui est expansible transversalement (T) sous l'action de la tige filetée (92) de la vis de fixation (90) lors du vissage de cette dernière pour coopérer avec une portion de surface interne (142) en vis-à-vis d'une seconde paroi latérale (144) de la coque (34) du boîtier, parallèle et opposée à la première paroi latérale (112), pour provoquer le serrage de la première face latérale du corps (34) du mécanisme en appui contre la face latérale interne de la première paroi latérale de la coque.

13. Antivol selon la revendication 12, **caractérisé en ce que** la partie expansible (130) est réalisée venue de matière avec le corps (32) du mécanisme.

14. Antivol selon la revendication 13, **caractérisé en ce que** la partie expansible (130) du corps (32) du mécanisme est une patte qui est reliée au corps du mécanisme par une portion de matière (134) formant charnière d'articulation de la patte autour d'un axe perpendiculaire à l'axe (A1) de la vis (90) de fixation.

15. Antivol selon la revendication 14, **caractérisé en ce que** la patte articulée (130) comporte une première facette latérale (140), inclinée par rapport à l'axe de la vis, formant une rampe de commande avec laquelle coopère la vis (90, 92) lors du vissage pour provoquer son pivotement à partir d'une position d'origine vers une position expansée dans laquelle elle provoque le serrage de la première face latérale du corps du mécanisme en appui contre la face latérale interne de la première paroi latérale de la coque (34).

16. Antivol selon la revendication 15, **caractérisé en ce que** la patte articulée (130) comporte une seconde facette latérale plane (136) qui est coplanaire à ladite seconde face latérale (138) du corps (32) du mécanisme lorsque la patte (130) est dans sa position d'origine, et qui fait saillie transversalement vers l'extérieur par rapport à ladite seconde face lorsque la patte articulée est dans sa position expansée.

17. Antivol selon l'une quelconque des revendications 12 à 16, **caractérisé en ce que** le corps (32) du mécanisme comporte un perçage taraudé (94) qui reçoit en vissage un tronçon fileté (92) de la vis de fixation (90).

18. Antivol selon l'une quelconque des revendications 12 à 17, **caractérisé en ce que** la tête (104) de la vis de fixation est séparée de la tige filetée (92) par rupture lorsque le couple de serrage ou de desserrage appliqué à la tête est supérieur à une valeur prédéterminée.

19. Antivol selon la revendication 18, **caractérisé en ce que**, lors de l'introduction longitudinale du mécanisme dans la coque (34) du boîtier, la partie du tronçon d'extrémité supérieure (68) de la tige d'assemblage (63) qui fait saillie par rapport à la face supérieure (76) du corps (32) du mécanisme coopère avec le bord de la coque (34) qui délimite l'ouverture (33) d'introduction du mécanisme (30) pour provoquer automatiquement l'escamotage de la tige d'assemblage (63).

## Patentansprüche

1. Lenkschloß (20) für ein Kraftfahrzeug, wobei das Lenkschloß ein Gehäuse (34) umfaßt, in dem ein Lenkschloßmechanismus (30) angeordnet ist, und wobei der Lenkschloßmechanismus (30) einen Körper (32) und ein bewegliches Verriegelungselement (28) aufweist, welches in bezug auf den Körper (32) des Mechanismus (30) in Längsrichtung von hinten nach vorne zwischen einer Ruhestellung, in welcher das Lenkschloß entriegelt ist, und einer aktiven Stellung, in welcher das Lenkschloß verriegelt ist, verschiebbar angeordnet ist, und wobei das Gehäuse mindestens ein schalenförmiges Teil (34) umfaßt, in dem der Lenkschloßmechanismus (30) mit Hilfe von mindestens einem Verbindungsstift (63) fixiert ist, der für die Montage oder Demontage des Mechanismus von der Außenseite des schalenförmigen Teiles (34) des Gehäuses aus zugänglich ist, und der sich axial (A1) in das Innere des schalenförmigen Teiles (34) des Behälters erstreckt und den Körper (32) des Mechanismus (30) in einer vertikalen Richtung (A1) senkrecht zur Richtung (L) der Verschiebung des beweglichen Verriegelungselementes (28) und in der Nähe des beweglichen Elementes (28, 25) durchquert, und wobei der Verbindungsstift (63) mit dem beweglichen Element (28, 27) zusammenwirkt, derart, daß eine axiale Verschiebung (A1) des Verbindungsstiftes (63) zur Demontage des Lenkschloßmechanismus (30) nur möglich ist, wenn sich das bewegliche Verriegelungselement (28) in seiner Ruhestellung befindet, wobei es sich bei dem Verbindungsstift (63) um einen in dem Körper (32) des Mechanismus angeordneten versenkbaren Stift handelt, in bezug auf den der Verbindungsstift zwischen einer oberen Blockierstellung, in die er elastisch zurückgedrückt wird und bei der sein oberer Endabschnitt (68) sich durch eine in einem Teil der oberen Wand (74) des schalenförmigen Teiles angeordnete Verbindungsöffnung (62) erstreckt, und einer unteren versenkten Stellung zur Montage oder Demontage verschiebbar angeordnet ist, **dadurch gekennzeichnet, daß** der Verbindungsstift (63) einen breiter werdenden Zwischenabschnitt (66) aufweist, der von einer Vertiefung (27) des beweglichen Verriegelungselementes (28) in der Ruhestellung aufnehmbar ist, um in dieser Position ein Versenken des Verbindungsstiftes (63) zu ermöglichen.

2. Lenkschloß nach Anspruch 1, **dadurch gekennzeichnet, daß** der Verbindungsstift (63) mehrstufig ausgebildet ist und einen unteren schmalen Abschnitt (65) mit reduziertem Durchmesser aufweist, der in vertikaler Richtung durch eine untere radiale Schulter (69) eines breiter werdenden Zwischenabschnittes (66) mit großem Durchmesser begrenzt ist, wobei sich die Schulter in der oberen Stellung des Verbindungsstiftes gegenüber einem in Längsrichtung orientierten horizontalen Bereich der oberen Oberfläche (23) des beweglichen Verriegelungselementes (28) erstreckt, und daß eine seitliche in Längsrichtung orientierte vertikale Fläche (25) des beweglichen Verriegelungselementes (28), die der zylinderförmigen Wand (67) des unteren schmalen Abschnittes (65) benachbart angeordnet ist, eine vertikale Vertiefung (27) aufweist, welche, in der Ruhestellung des beweglichen Verriegelungselementes (28), die Verschiebung des breiter werdenden Zwischenabschnittes (66) des Verbindungsstiftes (63) in die untere versenkte Stellung ermöglicht.

3. Lenkschloß nach Anspruch 2, **dadurch gekennzeichnet, daß** die besagte untere radiale Schulter (69) durch die ringförmige untere Fläche eines äußeren radialen Kragens (66) gebildet wird, der den verbreiterten Zwischenabschnitt bildet und der den schmalen unteren Abschnitt (65) in bezug auf den oberen Endabschnitt (68) des Verbindungsstiftes (63) abgrenzt.

4. Lenkschloß nach einem der Ansprüche 2 oder 3, **dadurch gekennzeichnet, daß** in vertikaler Richtung zwischen der besagten unteren Schulter (69) und dem Körper (32, 84, 86) des Mechanismus eine Druckfeder (80) angeordnet ist, um den Verbindungsstift (63) elastisch in seine obere Blockierstellung zurückzudrücken.

5. Lenkschloß nach einem der Ansprüche 2 bis 4, **dadurch gekennzeichnet, daß** der schmale untere Abschnitt (65) des Verbindungsstiftes (63) in einer Bohrung (64) des Körpers (32) des Mechanismus (30) verschiebbar geführt ist.

6. Lenkschloß nach Anspruch 5 in Verbindung mit Anspruch 4, **dadurch gekennzeichnet, daß** der schmale untere Abschnitt (65) des Verbindungsstiftes (63) durch die Rückholfeder (80) hindurchgeführt ist.

7. Lenkschloß nach Anspruch 5, **dadurch gekennzeichnet, daß** die Rückholfeder (80) seitlich in bezug auf den schmalen unteren Abschnitt (65) des Verbindungsstiftes (63) versetzt angeordnet ist.

8. Lenkschloß nach einem der Ansprüche 5 bis 7 in Verbindung mit Anspruch 3, **dadurch gekennzeichnet, daß** die Bohrung (64) zur Führung des schmalen unteren Abschnittes (65) des Verbindungsstiftes in vertikaler Richtung oben in dem Bodenbereich einer Aufnahme (82) einmündet, in den der Kragen (66) verschiebbar ist, und die selber oben eine Mündung aufweist, derart, daß zur Festlegung der oberen Blockierstellung des Verbindungsstiftes (63) die obere Ringfläche (70) des Kragens mit einem gegenüberliegenden Bereich der inneren Fläche (72) der oberen Wand (74) des schalenförmigen Teiles (34) zusammenwirkt.

9. Lenkschloß nach einem der Ansprüche 5 bis 8, **dadurch gekennzeichnet, daß** die Bohrung zur Führung des schmalen unteren Abschnittes (65) des Verbindungsstiftes (63) in vertikaler Richtung unten eine Mündung aufweist, und daß das untere freie Ende (100) des Verbindungsstiftes (63) nach unten in vertikaler Richtung hervorragt, um mit einem gegenüberliegenden Bereich (102, 92) einer Fixierschraube (90) zusammenzuwirken, die nach dem Zusammenbau des Lenkschloßmechanismus eingeschraubt wird, um den Verbindungsstift (63) in seiner oberen Blockierstellung festzusetzen.

10. Lenkschloß nach Anspruch 9, **dadurch gekennzeichnet, daß** die Fixierschraube (90) koaxial (A1) zu dem Verbindungsstift (63) (A1) angeordnet ist.

11. Lenkschloß nach Anspruch 9, **dadurch gekennzeichnet, daß** die Fixierschraube (90) senkrecht zu dem Verbindungsstift (63) angeordnet ist.

12. Lenkschloß nach einem der Ansprüche 9 bis 11, **dadurch gekennzeichnet, daß** in der angezogenen Stellung der Fixierschraube (90) mindestens eine erste den Körper (32) des Mechanismus (30) begrenzende äußere seitliche Fläche (108) durch Abstützen an einem Bereich einer inneren Oberfläche (110) einer ersten seitlichen Wand (112) des schalenförmigen Teiles (34) des Behälters, die im wesentlichen parallel zur Achse (A1) der Fixierschraube angeordnet ist, geklemmt ist, und daß der Körper (32) des Mechanismus ein Teil (130) umfaßt, das in Querrichtung (T) unter der Einwirkung des Gewindeschaftes (92) der Fixierschraube (90) bei der Verschraubung Letzterer dehnbar ist, um mit einem Bereich der inneren Oberfläche (142) einer zweiten seitlichen Wand (144) des schalenförmigen Teiles (34) des Behälters zusammenzuwirken, die der ersten seitlichen Wand (112) gegenüberliegt und zu dieser parallel angeordnet ist, um die Klemmung der ersten seitlichen Fläche des Körpers (32) des Mechanismus durch Abstützen an der inneren seitlichen Fläche der ersten seitlichen Wand des schalenförmigen Teiles zu bewirken.

13. Lenkschloß nach Anspruch 12, **dadurch gekennzeichnet, daß** das dehnbare Teil (130) und der Körper (32) des Mechanismus einstückig ausgebildet sind.

14. Lenkschloß nach Anspruch 13, **dadurch gekennzeichnet, daß** es sich bei dem dehnbaren Teil (130) des Körpers (32) des Mechanismus um eine Klaue handelt, die mit dem Körper des Mechanismus über einen Materialbereich (134) verbunden ist, der ein Scharnier bildet, mittels welchem die Klaue um eine zur Achse (A1) der Fixierschraube (90) senkrechte Achse schwenkbar ist.

15. Lenkschloß nach Anspruch 14, **dadurch gekennzeichnet, daß** die schwenkbare Klaue (130) eine erste seitliche Fläche (140) aufweist, die in bezug auf die Achse der Schraube geneigt angeordnet ist und eine Steuerrampe bildet, mittels welcher die Schraube (90, 92) bei der Verschraubung zusammenwirkt, um das Verschwenken der Klaue von einer Ausgangsstellung in eine ausgedehnte Stellung zu bewirken, bei welcher sie die Klemmung der ersten seitlichen Fläche des Körpers der Mechanik durch Abstützen an der inneren seitlichen Fläche der ersten seitlichen Wand des schalenförmigen Teiles (34) verursacht.

16. Lenkschloß nach Anspruch 15, **dadurch gekennzeichnet, daß** die schwenkbare Klaue (130) eine zweite seitliche ebene Fläche (136) aufweist, die koplanar zu der zweiten seitlichen Fläche (138) des Körpers (32) des Mechanismus angeordnet ist, wenn die Klaue (130) sich in ihrer Ausgangsstellung befindet, und die gegenüber der besagten zweiten Fläche in Querrichtung nach Außen hervorragt, wenn die schwenkbare Klaue sich in ihrer ausgedehnten Stellung befindet.

17. Lenkschloß nach einem der Ansprüche 12 bis 16, **dadurch gekennzeichnet, daß** der Körper (32) des Mechanismus eine mit einem Innengewinde versehene Bohrung (94) aufweist, in der ein Gewindeschaft (92) der Fixierschraube (90) verschraubbar angeordnet ist.

18. Lenkschloß nach einem der Ansprüche 12 bis 17, **dadurch gekennzeichnet, daß** der Kopf (104) der Fixierschraube von dem Gewindeschaft (92) durch Abbrechen trennbar ist, sofern das auf den Kopf ausgeübte Drehmoment beim Anziehen oder Lösen über einem vorgegebenen Wert liegt.

19. Lenkschloß nach Anspruch 18, **dadurch gekennzeichnet, daß** bei Einführen des Mechanismus in das schalenförmige Teil (34) des Gehäuses der Bereich des oberen Endabschnittes (68) des Verbindungsstiftes (63), der in bezug auf die obere Fläche (76) des Körpers (32) des Mechanismus hervorragt, mit dem Rand des schalenförmigen Teiles (34), der die Öffnung (33) zur Einführung des Mechanismus (30) begrenzt, zusammenwirkt, um ein automatisches Zurückschieben des Verbindungsstiftes (63) zu bewirken.

## Claims

1. Anti-theft device (20) for the steering column (22) of a motor vehicle, of the type in which the anti-theft device comprises a casing (34) in which an anti-theft mechanism (30) is arranged, of the type in which the anti-theft mechanism (30) comprises a mechanism body (32) and a movable locking element (28) which is displaced with respect to the body (32) of the mechanism (30) and in longitudinal translation from the rear to the front between an inoperative position in which the anti-theft device is unlocked and an operative position in which the anti-theft device is locked, of the type in which the casing comprises at least one shell (34) in which the anti-theft mechanism (30) is fixed by means of at least one assembly rod (63) accessible from the exterior of the shell (34) of the casing for the installation or removal of the mechanism and extending axially (A1) inside the shell (34) of the casing and through the body (32) of the mechanism (30) in a vertical direction (A1) perpendicular to the longitudinal direction (L) of translation of the movable locking element (28) and in the vicinity of the movable element (28, 25), and of the type in which the assembly rod (63) cooperates with the movable element (28, 27) so as to allow for axial displacement (A1) of the assembly rod (63) for the removal of the anti-theft mechanism (30) only when the movable locking element (28) is in the inoperative position, and in which the assembly rod (63) is a retractable rod carried by the body (32) of the mechanism with respect to which it is mounted to slide between a top locking position to which it is returned resiliently (80) and in which its upper end portion (68) extends through an assembly hole (62) formed in an upper wall part (74) of the shell and a bottom retracted position for installation or removal, **characterised in that** the assembly rod (63) comprises a wider intermediate portion (66) intended to be housed in notch (27) in the movable locking element (28) in the inoperative position of the latter so that the assembly rod (63) can be retracted in this position.

2. Anti-theft device according to claim 1, **characterised in that** the assembly rod (63) is stepped and comprises a narrow lower portion (65) of reduced diameter delimited vertically with respect to a wider intermediate portion (66) of larger diameter by a lower radial shoulder (69) which, in the top position of the assembly rod, extends opposite a longitudinally and horizontally extending upper surface part (23) of the movable locking element (28), and **in that** a longitudinally and vertically extending lateral face (25) of the movable locking element (28) adjacent to the cylindrical wall (67) of the narrow lower portion (65) comprises a vertical notch (27) allowing for the passage of the wider intermediate portion (66) of the assembly rod (63) in the bottom retracted position when the movable locking element (28) is in the inoperative position.

3. Anti-theft device according to claim 2, **characterised in that** the said lower radial shoulder (69) is the lower annular face of an outer radial collar (66) which forms the wider intermediate portion and which delimits the narrow lower portion (65) with respect to the upper end portion (68) of the assembly rod (63).

4. Anti-theft device according to one of claims 2 or 3, **characterised in that** a compression spring (80) is interposed vertically between the said lower shoulder (69) and the body (32, 84, 86) of the mechanism in order to return the assembly rod (63) resiliency to its top locking position.

5. Anti-theft device according to any one of claims 2 to 4, **characterised in that** the narrow lower portion (65) of the assembly rod (63) is slidably guided in a bore (64) in the body (32) of the mechanism (30).

6. Anti-theft device according to claim 5 in combination with claim 4, **characterised in that** the return spring (80) is traversed by the narrow lower portion (65) of the assembly rod (63).

7. Anti-theft device according to claim 5, **characterised in that** the return spring (80) is offset laterally with respect to the narrow lower portion (65) of the assembly rod (63).

8. Anti-theft device according to any one of claims 5 to 7 in combination with claim 3, **characterised in that** the guide bore (64) in the narrow lower portion (65) of.the assembly rod (63) leads vertically upwards into the bottom of a housing (82) in which the collar (66) is displaced and which itself leads upwards in such a manner that the upper annular face (70) of the collar cooperates with an opposite part of the inner face (72) of the upper wall (74) of the shell (34) in order to determine the top locking position of the assembly rod (63).

9. Anti-theft device according to any one of claims 5 to 8, **characterised in that** the guide bore in the narrow lower portion (65) of the assembly rod (63) leads vertically downwards and **in that** the lower free end (100) of the assembly rod (63) projects vertically downwards in order to cooperate with an opposite part (102, 92) of a fixing screw (90) mounted after the assembly of the anti-theft mechanism in order to fix the assembly rod (63) in the top locking position.

10. Anti-theft device according to claim 9, **characterised in that** the fixing screw (90) is coaxial (A1) with the assembly rod (63).

11. Anti-theft device according to claim 9, **characterised in that** the fixing screw (90) is perpendicular to the assembly rod (63).

12. Anti-theft device according to any one of claims 9 to 11, **characterised in that**, in the tightened position of the fixing screw (90), at least a first outer lateral face (108) which delimits the body (32) of the mechanism (30) is brought transversely to bear against an opposite inner surface part (110) of a first lateral wall (112) of the shell (34) of the casing substantially parallel to the axis (A1) of the fixing screw and **in that** the body (32) of the mechanism comprises a part (130) which can be expanded transversely (T) by the threaded stem (92) of the fixing screw (90) when the latter is screwed in so that it cooperates with an opposite inner surface part (142) of a second lateral wall (144) of the shell (34) of the casing parallel to and opposite the first lateral wall (112) in order to bring the first lateral face of the body (34) of the mechanism to bear against the inner lateral face of the first lateral wall of the shell.

13. Anti-theft device according to claim 12, **characterised in that** the expandable part (130) is made in one piece with the body (32) of the mechanism.

14. Anti-theft device according to claim 13, **characterised in that** the expandable part (130) of the body (32) of the mechanism is a lug connected to the body of the mechanism by a material part (134) forming a hinge for the lug about an axis perpendicular to the axis (A1) of the fixing screw (90).

15. Anti-theft device according to claim 14, **characterised in that** the hinged lug (130) comprises a first lateral side (140) inclined with respect to the axis of the screw forming a control ramp with which the screw (90, 92) cooperates when it is screwed in so that it pivots from a starting position to an expanded position in which it brings the first lateral face of the body of the mechanism to bear against the inner lateral face of the first lateral wall of the shell (34).

16. Anti-theft device according to claim 15, **characterised in that** the hinged lug (130) comprises a second flat lateral side (136) which is coplanar with the said second lateral face (138) of the body (32) of the mechanism when the lug (130) is in its starting position and which projects transversely towards the outside with respect to the said second face when the hinged lug is in its expanded position.

17. Anti-theft device according to any one of claims 12 to 16, **characterised in that** the body (32) of the mechanism comprises a tapped bore (64) into which a threaded portion (92) of the fixing screw (90) is screwed.

18. Anti-theft device according to any one of claims 12 to 17, **characterised in that** the head (104) of the fixing screw is broken off the threaded stem (92) when the tightening or loosening moment applied to the head is greater than a predetermined value.

19. Anti-theft device according to claim 18, **characterised in that**, when the mechanism is introduced longitudinally into the shell (34) of the casing, the part of the upper end portion (68) of the assembly rod (63) which projects with respect to the upper face (76) of the body (32) of the mechanism cooperates with the edge of the shell (34) which delimits the insertion opening (33) of the mechanism (30) so that the assembly rod (63) is automatically retracted.
